# EUROPÄISCHE PATENTSCHRIFT

(11) **EP 1 063 441 B1**
(45) Veröffentlichungstag und Bekanntmachung des Hinweises auf die Patenterteilung: **07.09.2005**
(21) Anmeldenummer: 00112834.7
(22) Anmeldetag: 17.06.2000
(51) Int. Cl.: F16D 51/22

(54) **Trommelbremseinrichtung**
Drum brake device
Dispositif de frein à tambour

(30) Priorität: 21.06.1999 DE 19928334; 07.06.2000 DE 10028283
(43) Veröffentlichungstag der Anmeldung: 27.12.2000
(73) Patentinhaber: SRAM Deutschland GmbH, 97404 Schweinfurt (DE)
(72) Erfinder: Schmidt, Frank, 97422 Schweinfurt (DE); Huber, Thomas, 97425 Schwebheim (DE); Schäflein, Egon, 97422 Schweinfurt (DE); Rau, Johannes, 89547 Gerstetten (DE)

(56) Entgegenhaltungen:
- DE-A- 3 831 297
- DE-A- 19 705 831
- DE-B- 1 159 709
- DE-B- 1 171 289
- DE-C- 590 456
- GB-A- 1 053 617
- GB-A- 1 090 058
- US-A- 1 162 048
- US-A- 1 285 214
- US-A- 1 652 479
- US-A- 1 712 526
- US-A- 1 804 929
- US-A- 1 876 177
- US-A- 1 928 060
- US-A- 4 905 800

## Beschreibung

Die Erfindung bezieht sich auf eine Bremseinrichtung für mindestens eine Achse eines Laufrades eines Fahrzeuges gemäß dem Oberbegriff des Anspruches 1.

Aus der deutschen Patentschrift 1 069 019 ist eine Betätigungseinrichtung für eine mechanisch betätigte Innenbackenbremse für Fahrzeugnaben bekannt geworden, aus der das herkömmlich Prinzip einer Bremsbackenanordnung ersichtlich ist, die für Bremsen für leichte Fahrzeuge möglicherweise Anwendung findet. Die beiden Bremsbacken werden über einen drehbaren Nocken gegen Federkraft aufgeweitet und drehen sich um einen Drehpunkt in der Weise, dass die Bremsbacken an der Bremstrommel zur Anlage kommen. Da der auflaufende Bremsbacken eine höhere Bremswirkung hat als der ablaufende, ist auch dort der Verschleiß höher, so dass es nach einiger Zeit der Benutzung zu unterschiedlichen Belaghöhen auf den beiden Bremsbacken kommt, wodurch Verspannungen am Nocken, der durch den Bremshebel betätigt wird, kommt. Da der Drehpunkt zwischen den Bremsbacken und dem Nocken jeweils einen auf einem Bremsteller festen Drehpunkt aufweisen, ist es nicht möglich, einen Ausgleich zwischen den beiden Bremsbacken in Bezug auf ihre Anpresskraft an der Bremstrommel zu schaffen. Die Bremse wird mit zunehmendem Verschleiß an Bremskraft verlieren, da in zunehmendem Maße der ablaufende Bremsbacken die Bremskraft übernehmen muss.

Den vorbeschriebenen Nachteil des Ausgleichs der Bremsbacken hinsichtlich ihrer Anlage an der Bremstrommel vermeidet eine Mehrbackenbremse, gemäß der deutschen Patentschrift Nr. 949 329, die vorzugsweise als Zweibackeninnenbremse, insbesondere für Kraftfahrzeuge, ausgeführt ist und eine Zentriervorrichtung für die Bremsbacken in Ruhestellung aufweist, wobei die einander zugekehrten und von einem in an sich bekannter Weise schwimmend angeordneten Spreizorgan getrennten Bremsbackenenden über eine als Zentriervorrichtung wirkende Rückholfeder miteinander verbunden sind, die sich etwa in der Mitte radial zur Trommel an einem festen Reibkörper abstützt. Das schwimmend angeordnete Spreizorgan ist mit einer Bremswelle, an der ein Bremshebel zur Betätigung der Mehrbackenbremse angeordnet ist, über eine schwalbenschwanzförmige Führung verbunden, die in Kraftrichtung der beiden Bremsbacken verschieblich wirkt. Die Drehbewegung der Bremswelle wird über den Schwalbenschwanz auf das Spreizelement übertragen und die Bremswirkung kann durch die Anlage der Bremsbacken an einer Bremstrommel ungehindert und vor allen Dingen immer mit der jeweils gleichen Anlagekraft erfolgen. Bei zunehmendem Verschleiß kann der auflaufende Bremsbacken mit seinem größeren Verschleiß auf diese Weise stärker nachgestellt werden als der ablaufende Bremsbacken, der einen geringeren Verschleiß aufweist. Die Bremswirkung wird sich somit gegenüber der vorbeschriebenen Bremse gemäß der deutschen Patentschrift 1 069 019 nicht verändern. Patentschrift US1652479A offenbart eine Betätigunseinrichtung die die Merkmale des Oberbegriffs des Anspruchs 1 beinhaltet.

Die vorgeschlagene Bremseinrichtung, welche ebenfalls für die Abbremsung einer mit einem Laufrad eines Fahrrades verbundenen Bremstrommel ausgelegt ist, stellt eine weitere Fortentwicklung der vorbeschriebenen Bremsen dar, wobei insbesondere die Vereinfachungen der Ausführungen der Bremsbacken sowie der Ausführung des Nockens in Verbindung mit einem Bremshebel zur kostengünstigen Erstellung einer Bremseinrichtung beitragen, die wie folgt beschrieben wird:

Die Bremseinrichtung weist ein Backenelement auf, welches mit einem Halter verbunden ist, wobei der Halter mit einem Bremsträger derart verbindbar ist, dass das Backenelement auf dem Bremsträger gleichzeitig zentriert wird. Das Backenelement ist ähnlich einer Innenbandbremse gestaltet und weist vorzugsweise an seinem gesamten Umfang einen Bremsbelag auf. Der Halter ist mit dem Backenelement an einer Verbindungsstelle derart verbunden, dass das Backenelement zwei freie Bakkenhälften aufweist, die zu beiden Seiten der Verbindungsstelle Bereiche aufweisen, um die die Backenhälften federn können. Die Backenhälften können mit Versteifungen ausgestattet sein, die eine formgetreue Anlage der Backenhälften an der Bremstrommel garantieren. Im Bezug auf einen Nocken, der mit einem Bremshebel direkt verbunden ist, sind die Backenhälften vorgespannt, so dass der Nocken zwischen die Enden der Backenhälften eingeklemmt ist. Die Enden der Backenhälften sind überdies derart ausgestaltet, dass der Nocken in einer Kontur eingeklemmt ist, die ihm im unvorgespannten Zustand eine ganz bestimmte Position verleiht. Der Nocken ist, wie bereits angedeutet, direkt mit dem Bremshebel verbunden und weist keine Lagerung im Bremsträger auf. Bei Betätigung des Bremshebels wird der Nocken verdreht und die Backenhälften werden nach außen gegen die Bremstrommel gepreßt, wobei die Anpreßkraft für den jeweiligen Backen durch die Selbstzentrierung des Nockens im Neuzustand der Beläge wie auch nach einiger Gebrauchsdauer mit Verschleiß auf den Belägen gleichbleibt.

Es besteht die Möglichkeit, den umlaufenden Belag auch in zwei Belaghälften zu unterteilen, wodurch eine geringfügig Materialersparnis erzielt wird, die jedoch bei der Montage der Bremse mit der Zentrierung des Backenelementes möglicherweise negativ ins Gewicht fallen könnte. Bei der Montage des Backenelementes auf dem Bremsträger ist es erforderlich, das Backenelement als Zusammenbau mit dem Bremshebel zu montieren, da der Bremsträger einen Fortsatz aufweist, der den Bremshebel in seiner Einbauposition fixiert, so dass dieser während des Gebrauches nicht herausfallen kann. Der Fortsatz kann so gestaltet werden, dass es für den Bremshebel keine Demontagemöglichkeit gibt. Für den Fall, dass der Halter mit dem Bremshebel verschraubt ist, kann das Backenelement mit dem Bremshebel vom Bremsträger gelöst und in seine Einzelteile zerlegt werden.

Die Bremseinrichtung ist auf eine kostengünstige Herstellung ausgelegt, weshalb gemäß der vorliegenden Erfindung vorgeschlagen wird, das Backenelement aus einem tiefgezogenen Blechteil herzustellen, wobei der Halter integraler Bestandteil dieses Tiefziehteiles ist. Der Boden eines tiefgezogenen Napfes wird derart ausgestanzt, dass die Versteifungen der Backenhälften sowie der Halter mit seiner Zentrierung und seinen Befestigungsmöglichkeiten erhalten bleibt, wobei sowohl die Verbindungsstelle wie auch die Bereiche zur Federung und Vorspannung der Backenhälften ausgestaltbar sind. Die etwa gegenüber der Verbindungsstelle befindlichen Berührungsstellen der Backenhälften mit dem Nocken werden ebenfalls durch den Arbeitsgang beim Stanzen geformt, wobei es erforderlich sein kann, den am äußeren Umfang befindlichen Rand gesondert zu trennen, wobei die Breite des für die Trennung vorgesehenen Spaltes von der nötigen Vorspannung der Backenhälften abhängig ist.

Als Alternative zu der vorgenannten Bremseinrichtung aus einem tiefgezogenen Blechteil wird eine Bremseinrichtung aus Leichtmetall vorgeschlagen, die als Massivteil hergestellt wird, wobei die Versteifungen an den Backenhälften mit einem Widerstandsmoment ausgeführt werden können, welches den jeweiligen Anforderungen an den Bremsvorgang der einzelnen Backenhälften gerecht wird. Die ablaufende Backenhälfte kann auf diese Weise mit höherem und die auflaufende Backenhälfte mit geringerem Anpressdruck in den Bremsvorgang eingreifen. Da unter bestimmen Umweltbedingungen, speziell bei Feuchtigkeit Trommelbremsen schärfer reagieren als bei Trockenheit, kann das Widerstandsmoment so ausgelegt werden, dass auch unter ungünstigsten Umweltbedingungen eine Selbstverstärkung bis zur Selbsthemmung nicht auftreten kann.

Da es erforderlich ist, das Backenelement mit der Bremstrommel genau zu zentrieren, kann der Halter eine Zentrierbohrung aufweisen, die sich auf einer Achse der Nabe des Laufrades zentriert. Eine zweite Möglichkeit besteht darin, dass die Zentrierung zur Nabenachse im Bremsträger enthalten ist, wobei es lediglich erforderlich ist, das Backenelement auf dem Bremsträger lagengenau zu fixieren. Eine solche Fixierung kann über die Bohrungen zur Befestigung des Halters auf dem Bremsträger erfolgen.

Es ergibt sich somit die Aufgabe der Erfindung, ein Bremselement zu schaffen, welches kostengünstig herstellbar ist, wobei insbesondere auf schwenkbaren Lagerungen für das Backenelement und den Bremshebel verzichtet wird.

Die Lösung der Aufgabe ist in dem kennzeichnenden Teil des Anspruchs 1 beschrieben. Ausgestaltungen sind den Unteransprüchen zu entnehmen.

Zwei Ausführungsbeispiele einer Bremseinrichtung werden in fünf Zeichnungen erläutert. Es zeigen:
- Figur 1: einen Bremsträger mit einem Bremshebel und einem Backenelement mit einem umlaufenden Belag;
- Figur 2: das Backenelement mit einem Halter, der mit dem Backenelement an einer Verbindungsstelle verbunden ist und Bestandteil eines tiefgezogenen Napfes ist, aus dem Backenelement und der Halter herstellbar sind;
- Figur 3: das Backenelement mit dem Halter auf dem Bremsträger in zentrierter Position mit dem Bremshebel und einem Nocken, der im Backenelement unter Vorspannung angeordnet ist;
- Figur 4: ein weiters Ausführungsbeispiel eines Backenelementes mit einem Halter;
- Figur 5: das Backenelement gemäß Fig. 4 mit einem Nocken, der mit seiner speziellen Form die Richtung der Kräfte in das Backenelement steuert;
- Figur 6: das Backenelement gemäß Fig. 5 mit einem Bremshebel, der seine Position durch einen Anschlag und durch eine Nase am Backenelement fixiert.

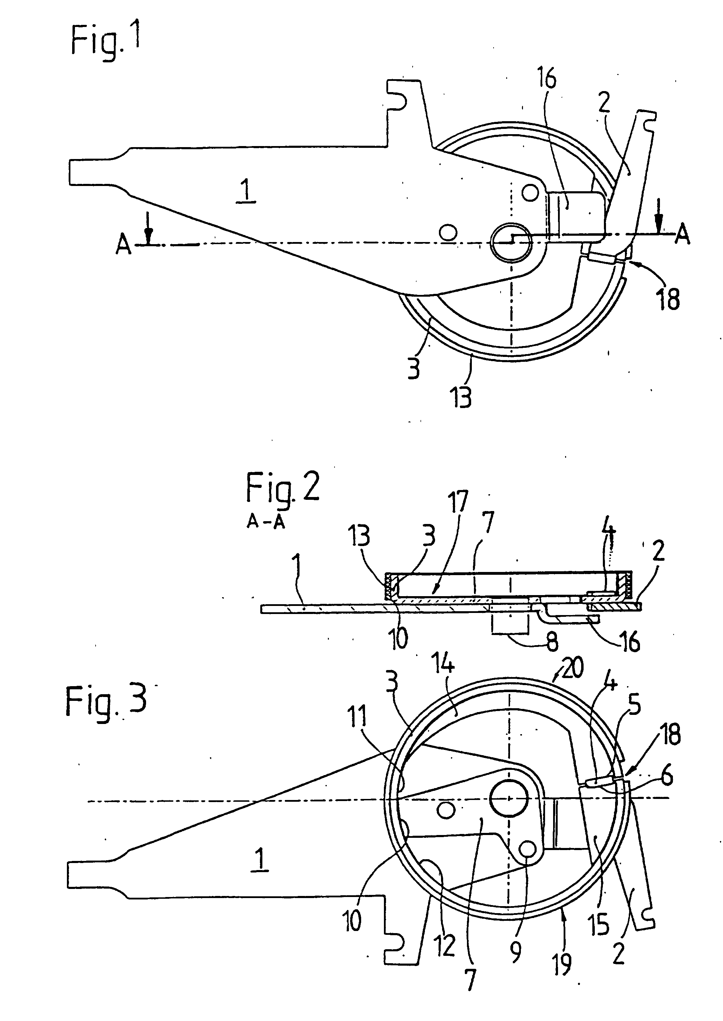

Wird mit 1 ein Bremsträger für eine Bremseinrichtung für Fahrräder bezeichnet, so ist gemäß den Fig. 1 bis 3 mit diesem ein Backenelement 3 mit einem Bremshebel 2 verbunden. Die Verbindung des Backenelementes 3 mit dem Bremsträger 1 erfolgt über einen Halter 7, der eine Zentrierbohrung 8 aufweist, mit welcher sich das Bakkenelement 3 auf einer Achse eines Laufrades des Fahrrades zentriert. Der Halter 7 und der Bremsträger 1 weisen Bohrungen 9 auf, über welche die beiden Teile miteinander verbindbar sind. Der Halter 7 ist mit dem Backenelement 3 an einer Verbindungsstelle 10 verbunden, wodurch sich eine erste Backenhälfte 19 und eine zweite Backenhälfte 20 ergeben, die um Bereiche 11 und 12 zu beiden Seiten der Verbindungsstelle 10 federnd schwingen können. Die erste Backenhälfte 19 weist ein Backenende 6 und die zweite Backenhälfte 20 ein Backenende 5 auf, zwischen denen ein Nocken 4 angeordnet ist, der mit dem Bremshebel 2 in Verbindung steht. Die Backenenden 5 und 6 sind über die Bereiche 11 und 12 vorgespannt, so dass der Nocken 4 zwischen den Backenenden 5 und 6 eingeklemmt ist und auch in Ruhestellung des Bremshebels 2 unter Vorspannung steht. Die Backenenden 5 und 6 weisen eine Form auf, die den Nocken 4 umschließen und ihm in der Ebene des Bremsträgers 1 keine Verschiebemöglichkeiten geben. Für den Fall, dass der Halter 7 am Bremsträger 1 montiert ist, sorgt ein Vorsprung 16 am Bremsträger 1 dafür, dass sich auch in einer Richtung senkrecht zur Ebene des Bremsträgers 1 keine Verschiebemöglichkeiten für den Bremshebel 2 und den Nocken 4 ergeben.

Das Backenelement 3 ist von einem Belag 13 umgeben, der mit einer Bremstrommel am Laufrad des Fahrrades durch Verdrehen des Nockens 4 über den Bremshebel 2 in Reibverbindung zu bringen ist. Gemäß Fig. 2 wird deutlich, dass der Halter 7 und das Backenelement 3 die Form eines Napfes 17 aufweisen, der tiefgezogen werden kann, wobei durch einen nachfolgenden Arbeitsgang der Halter 7 ebenso wie eine Versteifung 14 an der zweiten Backenhälfte 20 und eine Versteifung 15 an der ersten Backenhälfte 19 angeformt werden können. Bei dem vorbeschriebenen Arbeitsgang können auch die Konturen der Backenenden 5 und 6 ausgestaltet werden, wobei das Backenelement 3 am Außendurchmesser einen Spalt 18 aufweist, der in seiner Breite so ausgeführt sein muß, dass sowohl ausreichend Spiel zwischen dem Belag 13 und der Bremstrommel wie auch ausreichend Vorspannung zwischen den Backenenden 5 und 6 am Nocken 4 vorhanden ist.

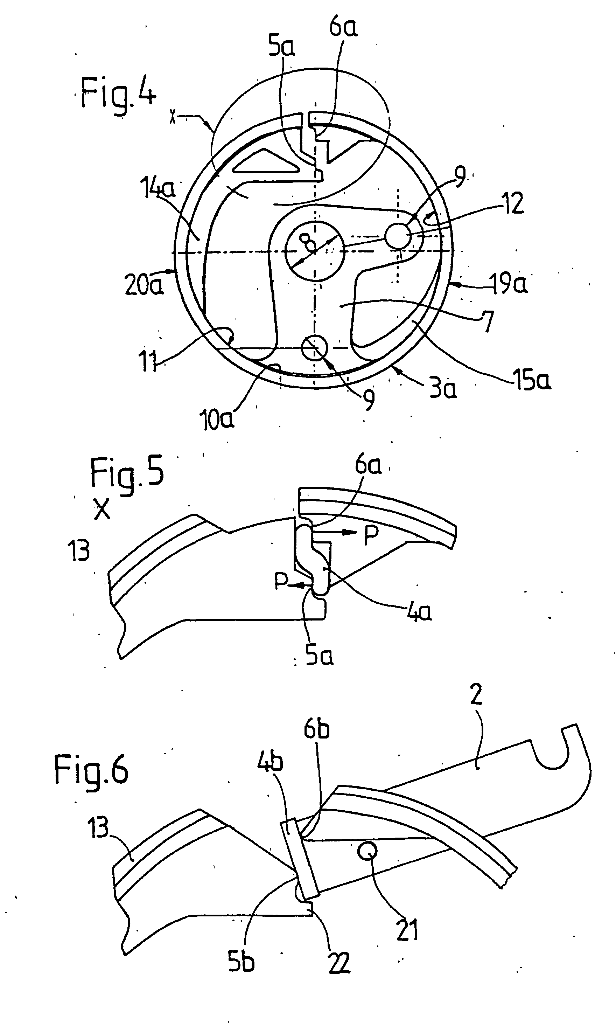

Gemäß den Fig. 4 und 5 wird ein Backenelement 3a dargestellt, welches eine erste Backenhälfte 19a und eine zweite Backenhälfte 20a aufweist, die mit dem Halter 7 über eine Verbindungsstelle 10a verbunden sind, wobei die Backenhälften 19a und 20a jeweils Bereiche 11 und 12 aufweisen, die in der Nachbarschaft der Verbindungsstelle 10a liegen und die Backenhälften 19a und 20a federn lassen. Die erste Backenhälfte 19a weist eine Versteifung 15a an einem Backenende 6a und die zweite Backenhälfte 20a weist eine Versteifung 14a an einem Backenende 5a auf.

Die Backenenden 5a und 6a bilden jeweils eine Kontur für einen S-förmig geformten Nocken 4a, welcher sich unter Vorspannung der beiden Backenhälften 19 a und 20a befindet und aufgrund der Kontur an den Backenenden 5a und 6a sich in seiner Lage im Ruhezustand nicht aus seiner Position in der Ebene des Bremsträgers 1 bewegen kann. die S-Form ist deshalb gewählt, dass sich beim Verschwenken des Nockens 4a jeweils an den Backenenden 5a und 6a eine Kraft P ausbildet, die in ihrer Richtung mit der Bewegungsrichtung der Backenenden 5a und 6a in etwa zusammenfällt. Die zumindest im Neuzustand der Brems-einrichtung auf diese Weise erzielte Bewegungsrichtung bewirkt an den Berührungsstellen zwischen dem Nokken 4a und den Backenenden 5a und 6a, dass sich ein Minimum an Reibung entwickelt und die über den Bremshebel 2 in die Bremseinrichtung eingeleitete Kraft mit hohem Wirkungsgrad auf das Backenelement 3 übertragbar ist.

Gemäß der Fig. 6 ist ein Bremshebel 2 dargestellt, der mit einem Nocken 4b verbunden ist und einen Anschlag 21 aufweist, welcher mit einem Backenende 6b zusammenwirkt, um die Position des Bremshebels 2 in seiner Ruhestellung zu fixieren. Eine gegenüberliegende Backenhälfte 5b ist an ihrer Berührungsstelle mit dem Nocken 4b als Rundung ausgeführt und gegen die Backenhälfte 6b vorgespannt, so dass der Bremshebel 2 in einer Richtung gegen den Uhrzeigersinn dreht und seinen Anschlag 21 gegen die Backenhälfte 6b legt. Um zu verhindern, dass der Nocken 4b aus seiner Position zwischen den Backenhälften 5b und 6b herausrutscht, ist an der Bakkenhälfte 5b eine Nase 22 angeordnet, welche verhindert, dass der Nocken in einer Richtung nach radial innen der Bremseinrichtung durchrutschen kann. Die Backenenden 5b und 6b sind in ihren Rundungen derart ausgestaltet, dass beim Bewegen des Bremshebels 2 gegenüber dem Nocken 4b eine abrollende Bewegung entsteht, die praktisch ohne Reibung verläuft und der Bremseinrichtung auf diese Weise eine sehr gefühlvolle Dosierbarkeit verleiht.

Wie aus den Abbildungen 4 bis 6 ersichtlich, handelt es sich um eine Bremseinrichtung aus einem Massivteil, welches vorzugsweise aus Aluminium besteht. Die Bakkenhälften 19a und 20a sind wieder gegeneinander vorgespannt, um den Nocken 4a oder 4b die vorbeschriebene Position zu verleihen. Die Versteifungen 14a und 15a können auf diese Weise in beliebiger Breite bis zur Breite des Bremsbelages 13 ausgeführt sein, wodurch es möglich wird, Widerstandsmomente zu verwirklichen, die eine Selbsthemmung der Bremseinrichtung bei ungünstigen Wetterbedingungen verhindern.

Gemäß den Fig. 3 und 4 teilt die Verbindungsstelle 10, 10a das Backenelement 3,3a in nahezu gleichlange Backenhälften 19,19a und 20,20a. Je nach Anwendung der vorgeschlagenen Bremseinrichtung kann diese mit höherer oder niedrigerer Bremswirkung ausgelegt werden, was durch die Verlängerung oder Verkürzung der auflaufenden ersten Backenhälfte 19,19a möglich ist. wird diese verlängert, so erhöht sich die Bremswirkung bei gleichbleibender Bedienungskraft über den Nocken 4,4a. Die Verbindungsstelle 10, 10a kann im Bezug auf die Position des Nocken 4,4a beliebig verschoben werden, was bedeutet, dass das Prinzip einer Bremseinrichtung gemäß der vorliegenden Erfindung für eine Vielzahl von verschiedenen Anwendungsbereichen in Frage kommt.

Die Bremseinrichtung gemäß der vorliegenden Erfindung hat den Vorteil, auf einfache Weise maschinell in großen Stückzahlen herstellbar zu sein und einen hohen Wirkungsgrad zu haben, so dass sich geringere Bedienungskräfte ergeben und möglicherweise vereinfachte Bedienungselemente realisieren lassen.

## Patentansprüche

1. Bremseinrichtung für mindestens eine Achse eines Laufrades eines Fahrzeuges, beispielsweise eines Fahrrades, eines Rollstuhles oder eines Behindertenfahrzeuges, zum Abbremsen einer mit dem Laufrad verbundenen Bremstrommel, umfassend
einen Bremsträger (1),
mindestens ein Backenelement (3,3a) mit Backenenden (5,5a,5b,6,6a,6b), das über einen Halter (7) verfügt, der mit dem Bremsträger (1) verbunden ist,
einen Bremshebel (2),
mindestens einen Nocken (4,4a,4b)
**dadurch gekennzeichnet, dass**
der Bremshebel (2) nicht mit dem Bremsträger (1) verbunden ist, und das Backenelement (3,3a) so ausgebildet ist, dass es die Backenenden (5,5a,5b,6,6a,6b) federnd gegen mindestens einen der Nocken (4,4a,4b) vorspannt.

2. Bremseinrichtung nach Anspruch 1,
**dadurch gekennzeichnet,**
**dass** der Halter (7) auf dem Bremsträger (1) über eine die Achse des Laufrades umgreifende Zentrierbohrung (8) zentriert wird.

3. Bremseinrichtung nach Anspruch 1 oder 2,
**dadurch gekennzeichnet,**
**dass** der Halter (7) Bohrungen (9) aufweist, über die er mit dem Bremsträger (1) verbunden und wahlweise auch zentriert ist.

4. Bremseinrichtung nach einem der Ansprüche 1 bis 3,
**dadurch gekennzeichnet,**
**dass** der Halter (7) mit dem Backenelement (3,3a) an einer Verbindungsstelle (10,10a) verbunden ist, die das Backenelement (3,3a) in zwei frei um die Verbindungsstelle (10,10a) federnde Backenhalften (19,19a;20,20a) unterteilt.

5. Bremseinrichtung nach einem der Ansprüche 1 bis 4,
**dadurch gekennzeichnet,**
**dass** die erste Backenhälfte (19,19a) mit ihrem Backenende (5,5a,5b) gegen den Nocken (4,4a,4b) und die zweite Backenhälfte (20,20a) mit ihrem Backenende (6,6a,6b) ebenfalls gegen den Nocken (4,4a,4b) in dessen Ruhelage federnd vorgespannt sind.

6. Bremseinrichtung nach einem der Ansprüche 1 bis 5,
**dadurch gekennzeichnet,**
**dass** das Backenelement (3,3a) zu beiden Seiten der Verbindungsstelle (10,10a) des Halters (7) Bereiche (11,12) aufweist, an denen die Backenhälften (19,19a,20,20a) bevorzugt federn können.

7. Bremseinrichtung nach Anspruch 6,
**dadurch gekennzeichnet,**
**dass** die Wandstärke des Backenelementes (3a) in den Bereichen (11,12) veränderlich ausgeführt ist, um die Kreisform des Backenelementes (3a) bei dessen Aufspreizung beim Bremsen in etwa zu erhalten.

8. Bremseinrichtung nach einem der Ansprüche 1 bis 7,
**dadurch gekennzeichnet,**
**dass** das Backenelement (3,3a) Versteifungen (15,15a) am auflaufenden Backen aufweist, die dazu beitragen, dass die Druckkräfte der Backenelemente unter Berücksichtigung der Selbstverstärkung des auflaufenden Backen (3,3a) bei deren Aufspreizung auf die außerhalb der Backenelemente befindliche Bremstrommel auf beiden Seiten der Verbindungsstelle (10, 10a) bei deren Aufspreizung im Bremszustand möglichst ausgeglichen sind.

9. Bremseinrichtung nach Anspruch 7 oder 8,
**dadurch gekennzeichnet,**
**dass** die Versteifung (15a), insbesondere entlang einem auflaufenden Teil des Backenelementes (3a) ein Widerstandsmoment aufweist, welches beim Bremsen auch unter ungünstigen Umweltbedingungen die dort entstehende Selbstverstärkung auf einen Wert unterhalb der Selbsthemmung begrenzt.

10. Bremseinrichtung nach einem der Ansprüche 1 bis 9,
**dadurch gekennzeichnet,**
**dass** das Backenelement (3) mit seinem Halter (7) aus einem tiefgezogenen Napf (17) hergestellt ist, wobei die Umrisse des Halters (7) sowie der Versteifungen (14,15) durch Ausstanzen angeformt sind.

11. Bremseinrichtung nach Anspruch 1
**dadurch gekennzeichnet,**
**dass** der Nocken (4, 4a) durch die vorgespannten Backenenden (5,5a;6,6a) eindeutig positioniert ist und gleichzeitig die Lagerung für den Bremshebel (2) in der Bremseinrichtung darstellt

12. Bremseinrichtung nach Anspruch 11,
**dadurch gekennzeichnet,**
**dass** jedes der Backenenden (5,5a,6,6a) eine Form aufweist, die den Nocken (4,4a) umschließt und so den Bremshebel (2) in jeder seiner möglichen Winkelstellungen lagert.

13. Bremseinrichtung nach Anspruch 11 oder 12,
**dadurch gekennzeichnet,**
**dass** der Nocken (4a) ein S-förmiges Profil aufweist, welches zu Beginn der Drehung des Nokkens (4a) eine Kraft (P) in der Bewegungsrichtung der Backenenden (5a,6a) bewirkt.

14. Bremseinrichtung nach Anspruch 1
**dadurch gekennzeichnet,**
**dass** der Nocken (4b) sowohl durch die vorgespannten Backenenden (5b,6b) als auch durch einen Anschlag (21) am Bremshebel (2) und durch eine Nase (22) am Backenende (5b) eindeutig positioniert ist und gleichzeitig die Lagerung für den Bremshebel (2) in der Bremseinrichtung darstellt.

15. Bremseinrichtung nach Anspruch 1 oder 14,
**dadurch gekennzeichnet,**
**dass** das Backenelement (3a) aus Leichtmetall besteht.

16. Bremseinrichtung nach Anspruch 14 oder 15,
**dadurch gekennzeichnet,**
**dass** das Backenelement (3a) komplett mit dem Träger (7) als Massivteil ausgeführt ist.

17. Bremseinrichtung nach Anspruch 14,
**dadurch gekennzeichnet,**
**dass** mindestens eines der Backenenden (5b,6b) als Rundung ausgeführt ist, die beim Bremsen auf je einer Planfläche des Nockens (4b) abrollt.

18. Bremseinrichtung nach einem der Ansprüche 1 bis 17,
**dadurch gekennzeichnet,**
**dass** der Bremshebel (2) zwischen einer Außenkontur der Bremseinrichtung und einem Vorsprung (16) in seiner Position gehalten und gegen Herausfallen in Richtung der Achse des Laufrades gesichert ist.

## Claims

1. Brake device for at least one axle of a running wheel of a vehicle, for example of a bicycle, of a roller chair or of a disabled vehicle, for the braking of a brake drum connected to the running wheel, the said brake device comprising a brake carrier (1), at least one shoe element (3, 3a) with shoe ends (5, 5a, 5b, 6, 6a, 6b), which has a holder (7) connected to the brake carrier (1), a brake lever (2), and at least one cam (4, 4a, 4b), **characterized in that** the brake lever (2) is not connected to the brake carrier (1), and the shoe element (3, 3a) is designed in such a way that it prestresses the shoe ends (5, 5a, 5b, 6, 6a, 6b) resiliently against at least one of the cams (4, 4a, 4b).

2. Brake device according to Claim 1, **characterized in that** the holder (7) is centred on the brake carrier (1) via a centring bore (8) surrounding the axle of the running wheel.

3. Brake device according to Claim 1 or 2, **characterized in that** the holder (7) has bores (9), via which the said holder is connected to the brake carrier (1) and optionally also centred.

4. Brake device according to one of Claims 1 to 3, **characterized in that** the holder (7) is connected to the shoe element (3, 3a) at a connection point (10, 10a) which subdivides the shoe element (3, 3a) into two shoe halves (19, 19a; 20, 20a) which are resilient about the connection point (10, 10a).

5. Brake device according to one of Claims 1 to 4, **characterized in that** the first shoe half (19, 19a) is resiliently prestressed with its shoe end (5, 5a, 5b) against the cam (4, 4a, 4b) and the second shoe half (20, 20a) with its shoe end (6, 6a, 6b) likewise against the cam (4, 4a, 4b) in the position of rest of the latter.

6. Brake device according to one of Claims 1 to 5, **characterized in that** the shoe element (3, 3a) has, on both sides of the connection point (10, 10a) of the holder (7), regions (11, 12) against which the shoe halves (19, 19a, 20, 20a) can preferably bear resiliently.

7. Brake device according to Claim 6, **characterized in that** the wall thickness of the shoe element (3a) in the regions (11, 12) is designed to be variable, in order approximately to maintain the circular shape of the shoe element (3a) in the event of the spreading of the latter during braking.

8. Brake device according to one of Claims 1 to 7, **characterized in that** the shoe element (3, 3a) has on the running-on shoe reinforcements (15, 15a) which contribute to ensuring that, taking into account the self-reinforcement of the running-on shoe (3, 3a) during the spreading of the latter, the pressure forces of the shoe elements on the brake drum located outside the shoe elements, on both sides of the connection point (10, 10a), are as far as possible compensated in the event of the spreading of the said shoe element in the braking state.

9. Brake device according to Claim 7 or 8, **characterized in that** the reinforcement (15a) has, in particular along a running-on part of the shoe element (3a), a moment of resistance which, during braking even under unfavourable environmental conditions, limits the self-reinforcement occurring there to a value below self-locking.

10. Brake device according to one of Claims 1 to 9, **characterized in that** the shoe element (3) together with its holder (7) is produced from a deep-drawn cup (17), the contours of the holder (7) and of the reinforcements (14, 15) being integrally formed by punching-out.

11. Brake device according to Claim 1, **characterized in that** the cam (4, 4a) is positioned unequivocally by the prestressed shoe ends (5, 5a; 6, 6a) and at the same time constitutes the mounting for the brake lever (2) in the brake device.

12. Brake device according to Claim 11, **characterized in that** each of the shoe ends (5, 5a, 6, 6a) has a shape which surrounds the cam (4, 4a) and thus supports the brake lever (2) in any of its possible angular positions.

13. Brake device according to Claim 11 or 12, **characterized in that** the cam (4a) has an S-shaped profile which, at the start of rotation of the cam (4a), gives rise to a force (P) in the direction of movement of the shoe ends (5a, 6a).

14. Brake device according to Claim 1, **characterized in that** the cam (4b) is positioned unequivocally both by the prestressed shoe ends (5b, 6b) and by a stop (21) on the brake lever (2) and also by a nose (22) on the shoe end (5b) and at the same time constitutes the mounting for the brake lever (2) in the brake device.

15. Brake device according to Claim 1 or 14, **characterized in that** the shoe element (3a) consists of light metal.

16. Brake device according to Claim 14 or 15, **characterized in that** the shoe element (3a) is produced, complete with the carrier (7), as a solid part.

17. Brake device according to Claim 14, **characterized in that** at least one of the shoe ends (5b, 6b) is designed as a rounding which rolls in each case on a plane face of the cam (4b) during braking.

18. Brake device according to one of claims 1 to 17, **characterized in that** the brake lever (2) is held in its position between an outer contour of the brake device and a projection (16) and is secured against falling out in the direction of the axle of the running wheel.

## Revendications

1. Dispositif de freinage pour au moins un axe d'une roue de roulement d'un véhicule, par exemple d'une bicyclette, d'un fauteuil roulant ou d'un véhicule pour handicapés, pour freiner un tambour de frein assemblé à la roue de roulement, comprenant
un support de frein (1),
au moins un élément (3, 3a) formant mâchoire, qui présente des extrémités de mâchoire (5, 5a, 5b, 6, 6a, 6b) et qui dispose d'un élément de fixation (7) qui est assemblé au support de frein (1),
un levier de frein (2),
au moins une came (4, 4a, 4b),
**caractérisé en ce que** le levier de frein (2) n'est pas relié au support de frein (1), et l'élément (3, 3a) formant mâchoire est conçu de telle sorte qu'il précontraint élastiquement les extrémités de mâchoire (5, 5a, 5b, 6, 6a, 6b) contre au moins une des cames (4, 4a, 4b).

2. Dispositif de freinage selon la revendication 1, **caractérisé en ce que** l'élément de fixation (7) est centré sur le support de frein (1) au moyen d'un perçage de centrage (8) s'engageant autour de l'axe de la roue de roulement.

3. Dispositif de freinage selon la revendication 1 ou 2, **caractérisé en ce que** l'élément de fixation (7) présente des perçages (9) par l'intermédiaire desquels il est assemblé au support de frein (1) et optionnellement également centré.

4. Dispositif de freinage selon l'une quelconque des revendications 1 à 3, **caractérisé en ce que** l'élément de fixation (7) est assemblé à l'élément (3, 3a) formant mâchoire en un point d'assemblage (10, 10a) qui divise l'élément (3, 3a) formant mâchoire en deux moitiés de mâchoire (19, 19a ; 20, 20a) librement élastiques autour du point d'assemblage (10, 10a).

5. Dispositif de freinage selon l'une quelconque des revendications 1 à 4, **caractérisé en ce que** la première moitié de mâchoire (19, 19a), par son extrémité de mâchoire (5, 5a, 5b), et la deuxième moitié de mâchoire (20, 20a), par son extrémité de mâchoire (6, 6a, 6b), sont précontraintes élastiquement contre la came (4, 4a, 4b) dans la position de repos de celle-ci.

6. Dispositif de freinage selon l'une quelconque des revendications 1 à 5, **caractérisé en ce que** l'élément (3, 3a) formant mâchoire présente, de part et d'autre du point d'assemblage (10, 10a) de l'élément de fixation (7), des régions (11, 12) autour desquelles les moitiés de mâchoire (19, 19a ; 20, 20a) peuvent préférentiellement se mouvoir élastiquement.

7. Dispositif de freinage selon la revendication 6,
**caractérisé en ce que** l'épaisseur de paroi de l'élément (3a) formant mâchoire est réalisée variable dans les régions (11, 12), afin d'obtenir approximativement la forme de cercle de l'élément (3a) formant mâchoire lors de son écartement lors du freinage.

8. Dispositif de freinage selon l'une quelconque des revendications 1 à 7, **caractérisé en ce que** l'élément (3, 3a) formant mâchoire présente des renforcements (15, 15a) sur la mâchoire menante, qui contribuent à ce que les forces de pression des éléments formant mâchoires sont, en tenant compte de l'auto-renforcement de la mâchoire menante (3, 3a) lors de son écartement sur le tambour de frein situé en dehors des éléments formant mâchoires, le plus possible équilibrées de part et d'autre du point d'assemblage (10, 10a) lors de l'écartement desdits éléments dans la position de freinage.

9. Dispositif de freinage selon la revendication 7 ou 8, **caractérisé en ce que** le renforcement (15a), notamment le long d'une partie menante de l'élément (3a) formant mâchoire, présente un couple de résistance qui, lors du freinage, même dans des conditions ambiantes défavorables, limite l'auto-renforcement qui s'y produit à une valeur inférieure à l'autoblocage.

10. Dispositif de freinage selon l'une quelconque des revendications 1 à 9, **caractérisé en ce que** l'élément (3) formant mâchoire est fabriqué avec son élément de fixation (7) à partir d'une coupelle emboutie (17), les contours de l'élément de fixation (7) et des renforcements (14, 15) étant formés par découpage.

11. Dispositif de freinage selon la revendication 1, **caractérisé en ce que** la came (4, 4a) est positionnée de façon univoque par les extrémités de mâchoire précontraintes (5, 5a ; 6, 6a), et elle constitue en même temps le palier de montage pour le levier de frein (2) dans le dispositif de freinage.

12. Dispositif de freinage selon la revendication 11, **caractérisé en ce que** chacune des extrémités de mâchoire (5, 5a ; 6, 6a) présente une forme qui entoure la came (4, 4a) et assure ainsi le montage du levier de frein (2) dans chacune de ses positions angulaires possibles.

13. Dispositif de freinage selon la revendication 11 ou 12, **caractérisé en ce que** la came (4a) présente un profil en S qui produit, au début de la rotation de la came (4a), une force (P) dans la direction de déplacement des extrémités de mâchoire (5a, 6a).

14. Dispositif de freinage selon la revendication 1, **caractérisé en ce que** la came (4b) est positionnée de façon univoque à la fois tant par les extrémités de mâchoire précontraintes (5b, 6b) que par une butée (21) sur le levier de frein (2) et par un ergot (22) sur l'extrémité de mâchoire (5b), et elle constitue en même temps le palier de montage pour le levier de frein (2) dans le dispositif de freinage.

15. Dispositif de freinage selon la revendication 1 ou 14, **caractérisé en ce que** l'élément (3a) formant mâchoire est réalisé en métal léger.

16. Dispositif de freinage selon la revendication 14 ou 15, **caractérisé en ce que** l'élément (3a) formant mâchoire, complet avec l'élément de fixation (7), est réalisé sous forme de pièce massive.

17. Dispositif de freinage selon la revendication 14, **caractérisé en ce qu'**au moins une des extrémités de mâchoire (5b, 6b) est réalisée sous forme d'arrondi qui, lors du freinage, roule sur une surface plane respective de la came (4b).

18. Dispositif de freinage selon l'une quelconque des revendications 1 à 17, **caractérisé en ce que** le levier de frein (2) est maintenu dans sa position, et empêché de tomber dans la direction de l'axe de la roue de roulement, entre un contour extérieur du dispositif de freinage et une saillie (16).
